# EUROPEAN PATENT APPLICATION

(11) **EP 1 994 848 A1**
(43) Date of publication of application: **26.11.2008**
(21) Application number: 07010313.0
(22) Date of filing: 24.05.2007
(51) Int. Cl.: A45C 5/14, A45C 13/38

(54) **Trolley bag**

(71) Applicant: Chen, Chun-Te, Jhonghe City, Taipei Hsien (TW); Tsai, Ming-Chu, Jhonghe City, Taipei Hsien (TW)
(72) Inventor: Chen, Chun-Te, Jhonghe City, Taipei Hsien (TW); Tsai, Ming-Chu, Jhonghe City, Taipei Hsien (TW)
(74) Representative: Hauck Patent- und Rechtsanwälte

(57) **Abstract**

A trolley bag has a bag body (10), a base (20), a handle assembly (30) and a stand assembly (50). The base (20) is connected to the bag body (10) and has four wheels (25). The handle assembly (30) is mounted on the bag body (10) and has a handle (33). The stand assembly (50) is connected to the base (20) and the handle assembly (30) and is capable of opening into a pushcart configuration. A person can move and keep the trolley bag in the pushcart configuration within their sight to prevent tampering and only supplies a horizontal force to push the trolley bag.

## Description

### 1. Field of the Invention

The present invention relates to a trolley bag, and more particularly to a trolley bag that has a stand assembly capable of opening into a pushcart configuration. A person may push the trolley bag in the pushcart configuration for ease of transit and increased security whilst traveling.

### 2. Description of Related Art

Traveling luggage cases are commonly used to load a number of articles when people travel. Because fully loaded luggage cases are too heavy for people to carry, trolley bags with wheels were developed. A conventional trolley bag comprises a case body, two front wheels, two rear wheels and a handle. The case body has a bottom. The front and rear wheels are mounted on the bottom to allow the trolley bag to move smoothly on the ground. The handle is retractably connected to the case body. When people carry the trolley bag, they grip the handle to pull the trolley bag behind them. When in motion, the trolley bag is inclined, causing the front wheels to lift and the rear wheels to remain in contact with a floor. Therefore the trolley bag is easier to move than a wheel-less suitcase. However, the person still mounting collars some of the weight on their arm.

When in use, the trolley bag follows behind the person and is not within their sight. Therefore, a dishonest person may be able to gain access to the bag to steal from or plant articles in the trolley bag.

To overcome the shortcomings, the present invention provides a trolley bag to mitigate or obviate the aforementioned problems.

The main objective of the invention is to provide a trolley bag that has a stand assembly cable of opening out into a pushcart configuration. A person may push the trolley bag in the pushcart configuration and keep the trolley bag within their sight to prevent tampering and only supplies a horizontal force to push the trolley bag.

A trolley bag has a bag body, a base, a handle assembly and a stand assembly. The base is mounted on the bag body and has four wheels. The handle assembly is connected to the bag body and has a handle. The stand assembly is connected to the base and the handle assembly and is capable of opening into a pushcart configuration. The person can utilize the trolley bag in the pushcart configuration to keep the baggage within their sight prevent access to dishonest persons and to ease transportation of heavy baggage.

Other objectives, advantages and novel features of the invention will become more apparent from the following detailed description when taken in conjunction with the accompanying drawings.

### IN THE DRAWINGS

Fig. 1 is a operational side view of a trolley bag in accordance with the present invention being inclined and the handle extending out for a person to pull the trolley bag;
Fig. 2 is an operational side view of the trolley bag in Fig. 1 with the stand assembly opened into a pushcart configuration;
Fig. 3 is a rear view of the trolley bag in Fig. 2;
Fig. 4 is a partially enlarged side view of the stand assembly of the trolley bag in Fig. 1; and
Fig. 5 is an operational side view of trolley bag in Fig. 1 showing a tray at a base of the trolley bag extending to carry an extra bag.

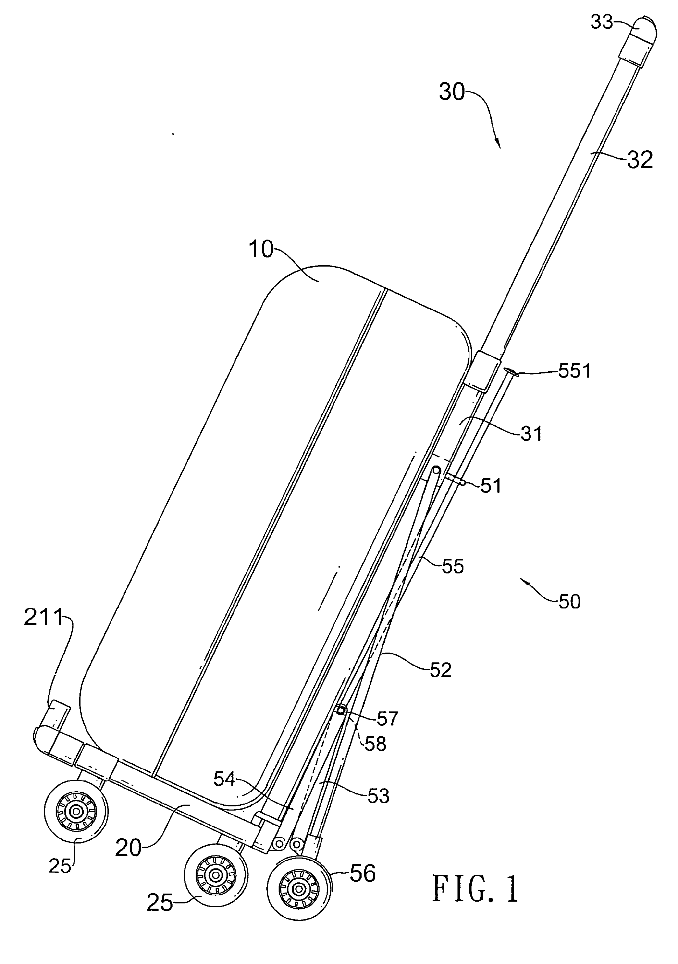

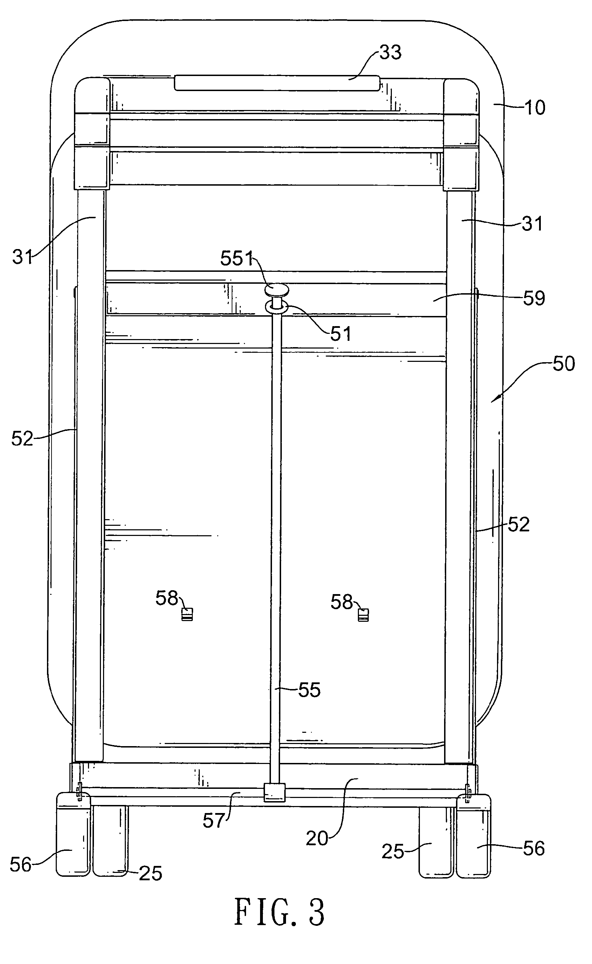

With reference to Figs. 1 to 3, a trolley bag in accordance with the present invention comprises a bag body (10), a base (20), a handle assembly (30) and a stand assembly (50) and has a weight.

The bag body (10) is hollow and has a rear, a bottom and two opposite sides.

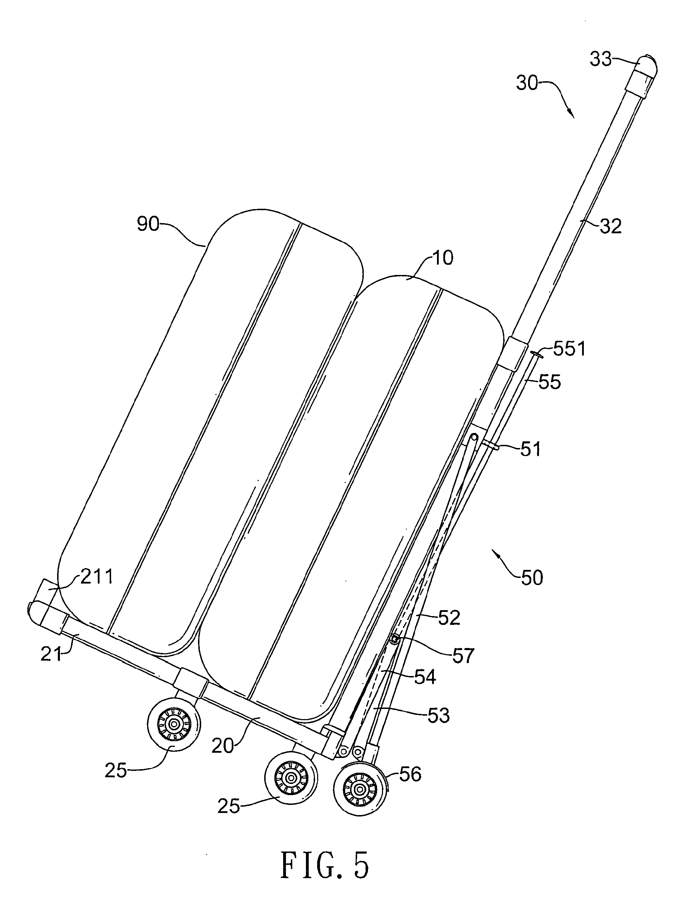

With further reference to Fig. 5, the base (20) is connected securely to the bottom of the bag body (10) and has a front, two front wheels (25) and two rear wheels (25). The base (20) may be hollow and have a tray (21). The front and rear wheels (25) are mounted on the base (20) to keep the trolley bag upright and move smoothly on a floor. The tray (21) is retractably mounted in the front of the base (20), may be extended to hold an external bag (90) and has a front and a stop (211). The stop (211) is mounted perpendicularly on the front of the tray (21) to keep the external bag (90) in the tray (21).

The handle assembly (30) is mounted on the rear of the bag body (10) and has two outer brackets (31), two inner bars (32) and a handle (33). The outer brackets (31) are hollow and are mounted on the rear of the bag body (10) respectively adjacent to the sides of the bag body (10) and each outer bracket (31) has an upper end and a lower end. The inner bars (32) are telescopically mounted respectively in the upper ends of the outer brackets (31) and each inner bar (32) has a handle end. The handle (33) is transversely connected between the handle ends of the inner bars (32). When pulling the trolley bag, a person grips the handle (33) of the handle assembly (30) and the trolley bag is inclined, as shown in Fig. 1.

The stand assembly (50) is connected to the base (20) and the handle assembly (30), is capable of opening into a pushcart configuration and has two legs (52), two stand wheels (56), two rear braces (53) and two front braces (54). The stand assembly (50) may further have a support (59), a mounting collar (51), a connecting rod (57), an activating rod (55) and at least one clasp (58). The legs (52) are connected respectively to the outer brackets (31). Each leg (52) has a top end and a bottom end. The top end of the leg (52) is connected pivotally to one of the outer brackets (31). The stand wheels (56) are mounted rotatably on the bottom ends of the legs (52). The rear braces (53) are connected respectively to the legs (52). Each rear brace (53) has a front end and a rear end. The rear end of the rear brace (53) is connected pivotally to the bottom end of one of the legs (52). The front braces (54) are connected respectively to the rear braces (53) and are connected respectively to the outer brackets (31). Each front brace (54) has a front end and a rear end. The front end of the front brace (54) is connected pivotally to the lower end of one of the outer brackets (31). The rear end of the front brace (54) is connected pivotally to the front end of one of the rear brace (53) to form a brace linkage.

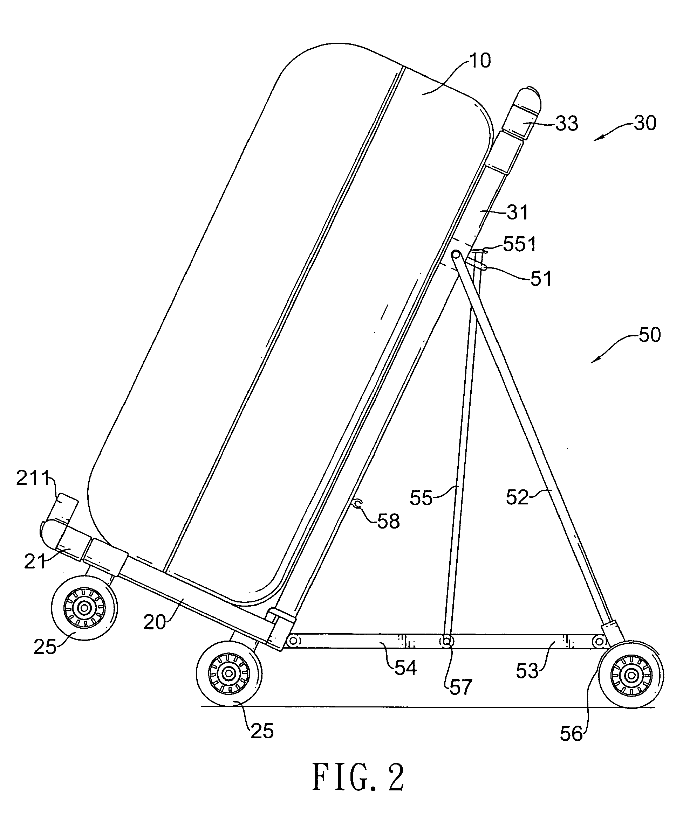

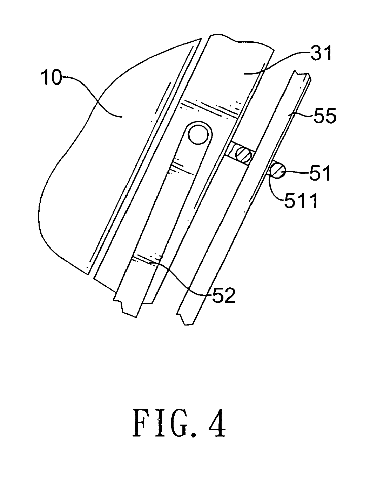

With further reference to Fig. 4, the support (59) is connected between the outer brackets (31). The mounting collar (51) is mounted on the support (59). The connecting rod (57) serves as a pivot pin to pivotally connect the front braces (54) to the rear braces (53), is connected to the front ends of the rear braces (53) and the rear ends of the front braces (54). Accordingly, one rear brace (53) and the front brace (54) connected to the rear brace (53) may pivot with respect to each other. The activating rod (55) is connected to the connecting rod (57), extends loosely and slidably through the mounting collar (51) and has a top end, a bottom end and a knob (551). The bottom end of the activating rod (55) is connected pivotally to the connecting rod (57). The knob (551) is mounted on the top end of the activating rod (55). The at least one clasp (58) is mounted on the rear of the bag body (10) and selectively clamps the connecting rod (57). To open the stand assembly (50), the user grips the knob (551) and pushes the activating rod (55) down and the connecting rod (57) moves down, forcing the rear and front braces (53, 54) to pivot with respect to each other into the brace linkage. When the stand assembly (50) is opened, the trolley bag in the pushcart configuration with the rear wheels (25) and the stand wheels (56) rolling on the ground, as shown in Fig. 2. Therefore, the person may push the trolley bag forward and to keep the trolley bag within their sight and the weight of the trolley bag is held by the stand assembly and the rear wheels instead of the person. When the stand assembly (50) is folded, the clasp (57) clamps the connecting rod (57) to prevent the stand assembly (50) from inadvertently opening.

The trolley bag in the pushcart configuration is easily moved by the person and allows the person to keep watching the trolley bag. Accordingly, dishonest persons get little chance to steal articles in the trolley bag. Furthermore, the weight of the trolley bag in the pushcart configuration is located between the rear wheels (25) and the stand wheels (56), is stable and does not turn so the person does not need to supply a force against the weight of the baggage, the person only needs to push the trolley bag with a forward force without any additional downward or upward forces against the weight of the trolley bag.

## Claims

1. A trolley bag comprising:
a bag body (10) being hollow and having a rear, a bottom and two opposite sides;
a base (20) being connected securely to the bottom of the bag body (10) and having a front, two front wheels (25) and two rear wheels (25) mounted on the base (20);
a handle assembly (30) mounted on the rear of the bag body (10) and having
two outer brackets (31) being hollow and mounted on the rear of the bag body (10) respectively adjacent to the sides of the bag body and each outer bracket (31) having an upper end and a lower end;
two inner bars (32) respectively mounted telescopically in the upper ends of the outer brackets (31) and each inner bar (32) having a handle end; and
a handle (33) transversely connected between the handle ends of the inner bars (32); and
a stand assembly (50) connected to the base (20) and the handle assembly (30), being capable of opening into a pushcart configuration and having
two legs (52) connected respectively to the outer brackets (31) and each leg (52) having
a top end connected pivotally to one of the outer brackets (31); and a bottom end;
two stand wheels (56) mounted rotatably on the bottom ends of the legs (52);
two rear braces (53) connected respectively to the legs (52) and each rear brace (53) having
a front end; and
a rear end connected pivotally to the bottom end of one of the legs (52); and
two front braces (54) connected respectively to the rear braces (53), connected respectively to the outer brackets (31) and each front brace (54) having
a front end connected pivotally to the lower end of one of the outer brackets (31) ; and
a rear end connected pivotally to the front end of one of the rear braces (53) to form a brace linkage.

2. The trolley bag as claimed in claim 1, wherein the stand assembly (50) further has
a support (59) connected between the outer brackets (31);
a mounting collar (51) mounted on the support (59);
a connecting rod (57) serving as a pivot pin to pivotally connect the front braces (54) to the rear braces (53), connected between the front ends of the rear braces (53) and between the rear ends of the front braces (54); and
an activating rod (55) connected to the connecting rod (57), extending loosely and slidably through the mounting collar (51) and having
a top end;
a bottom end connected pivotally to the connecting rod (57); and
a knob (551) mounted on the top end of the activating rod (55).

3. The trolley bag as claimed in claim 2, wherein the stand assembly (50) further has at least one clasp (58) mounted on the rear of the bag body (10) and selectively clamping the connecting rod (57).

4. The trolley bag as claimed in claim 3, wherein the base (20) is hollow and further has a tray (21) mounted retractably in the front of the base (20) and having a front and a stop (211) mounted perpendicularly on the front of the tray (21).

## Amended claims

### Amended claims in accordance with Rule 137(2) EPC.

**1.** A trolley bag comprising:
• a bag body (10) being hollow and having a rear, a bottom and two opposite sides;
• a base (20) being connected securely to the bottom of the bag body (10) and having a front, two front wheels (25) and two rear wheels (25) mounted on the base (20);
• a handle assembly (30) mounted on the rear of the bag body (10) and having
two outer brackets (31) being hollow and mounted on the rear of the bag body (10) respectively adjacent to the sides of the bag body and each outer bracket (31) having an upper end and a lower end;
two inner bars (32) respectively mounted telescopically in the upper ends of the outer brackets (31) and each inner bar (32) having a handle end; and
a handle (33) transversely connected between the handle ends of the inner bars (32); and
• a stand assembly (50) connected to the base (20) and the handle assembly (30), being capable of opening into a pushcart configuration and having
a support (59) connected between the outer brackets (31);
two legs (52) connected respectively to the outer brackets (31) and each leg (52) having a top end connected pivotally to one of the outer brackets (31); and a bottom end;
two stand wheels (56) mounted rotatably on the bottom ends of the legs (52);
two rear braces (53) connected respectively to the legs (52) and each rear brace (53) having a front end; and a rear end connected pivotally to the bottom end of one of the legs (52); and
two front braces (54) connected respectively to the rear braces (53), connected respectively to the outer brackets (31) and each front brace (54) having a front end connected pivotally to the lower end of one of the outer brackets (31); and a rear end connected pivotally to the front end of one of the rear braces (53) to form a brace linkage, wherein the trolley bag is **characterized in that**:
• the stand assembly (50) further has
a mounting collar (51) mounted on the support (59);
a connecting rod (57) serving as a pivot pin to pivotally connect the front braces (54) to the rear braces (53), connected between the front ends of the rear braces (53) and between the rear ends of the front braces (54); and
an activating rod (55) connected to the connecting rod (57), extending loosely and slidably through the mounting collar (51) and having a top end; a bottom end connected pivotally to the connecting rod (57); and
a knob (551) mounted on the top end of the activating rod (55).

**2.** The trolley bag as claimed in claim 1, wherein the stand assembly (50) further has at least one clasp (58) mounted on the rear of the bag body (10) and selectively clamping the connecting rod (57).

**3.** The trolley bag as claimed in claim 2, wherein the base (20) is hollow and further has a tray (21) mounted retractably in the front of the base (20) and having a front and a stop (211) mounted perpendicularly on the front of the tray (21).
